# EUROPÄISCHE PATENTSCHRIFT

(11) **EP 3 042 177 B1**
(45) Veröffentlichungstag und Bekanntmachung des Hinweises auf die Patenterteilung: **05.06.2019**
(21) Anmeldenummer: 14781497.4
(22) Anmeldetag: 30.09.2014
(51) Int. Cl.: G01N 15/10, G01N 15/14, G01N 15/00

(54) **IN-VITRO-VERFAHREN ZUM MARKIERUNGSFREIEN BESTIMMEN EINES ZELLTYPS EINER ZELLE**
IN VITRO METHOD FOR THE LABEL-FREE DETERMINATION OF A CELL TYPE OF A CELL
PROCÉDÉ IN VITRO POUR DÉTERMINER SANS MARQUAGE UN TYPE DE CELLULES

(30) Priorität: 09.10.2013 DE 102013220344; 20.01.2014 DE 102014200911
(43) Veröffentlichungstag der Anmeldung: 13.07.2016
(73) Patentinhaber: Siemens Healthcare GmbH, 91052 Erlangen (DE)
(72) Erfinder: HAYDEN, Oliver, 91074 Herzogenaurach (DE); SCHMIDT, Oliver, 91052 Erlangen (DE)
(86) Internationale Anmeldenummer: PCT/EP2014/070951
(87) Internationale Veröffentlichungsnummer: WO 2015/052046

(56) Entgegenhaltungen:
- DE-B3-102010 023 099
- US-A1- 2006 291 712
- BJ|RN KEMPER ET AL: "Digital holographic microscopy for live cell applications and technical inspection", APPLIED OPTICS, OPTICAL SOCIETY OF AMERICA, WASHINGTON, DC; US, Bd. 47, Nr. 4, 1. Februar 2008 (2008-02-01), Seiten A52-A61, XP007904218, ISSN: 0003-6935, DOI: 10.1364/AO.47.000A52
- ROMMEL C ET AL: "Microinjection based 3-dimensional imaging of subcellular structures with digital holographic microscopy", PROGRESS IN BIOMEDICAL OPTICS AND IMAGING, SPIE - INTERNATIONAL SOCIETY FOR OPTICAL ENGINEERING, BELLINGHAM, WA, US, Bd. 7368, 1. Januar 2009 (2009-01-01), Seiten 73680W-1, XP009141890, ISSN: 1605-7422, DOI: 10.1117/12.831562 ISBN: 978-0-8194-9850-2
- KUEHN J ET AL: "Submicrometer tomography of cells by multiple-wavelength digital holographic microscopy in reflection", OPTICS LETTERS, OPTICAL SOCIETY OF AMERICA, US, Bd. 34, Nr. 5, 1. März 2009 (2009-03-01), Seiten 653-655, XP001522472, ISSN: 0146-9592, DOI: 10.1364/OL.34.000653

## Beschreibung

Die Erfindung betrifft ein Verfahren zum markierungsfreien Bestimmen eines Zelltyps einer Zelle unter Verwendung einer Mikroskopiervorrichtung.

Das Bestimmen von Zellen und deren Zuordnung zu einem Zelltyp ist von großer Bedeutung in der Zytologie. In beispielsweise einer hämatologischen Untersuchung werden zelluläre Blutkomponenten, also Erythrozyten, Thrombozyten und weiße Blutzellen, bestimmt und quantifiziert. Eine Ermittlung der Leukozytenanzahl ("White Blood Count", WBC) sollte für eine umfangreiche Diagnostik die wesentlichen Populationen der weißen Blutzellen differenzieren können. Die weißen Zellen werden differenziert nach granulären Zellen (Neutrophilen, Eosinophilen, Basophilen) und nicht-granulären Zellen (Lymphozyten, Monozyten). Neben der Granularität unterscheiden sich die Zellen auch hinsichtlich der Fragmentierung des Zellkerns (ohne Fragmentierung: Mononukleare Zellen, also Lymphozyten und Monozyten; polymorphnukleare Zellen: Eosinophile, Basophile und Neutrophile) und der Zellgröße. Für die Differenzierung der granulären Zellen, im Besonderen eosinophile und basophile Granulozyten, wird eine Färbung eingesetzt. Die Auswertung der Zellpopulationen erfolgt üblicherweise durch vollautomatisierte Hämatologie-Analysatoren oder durch Mikroskopie. Vollautomatisierte Analysatoren müssen die Populationen nach festgesetzten Algorithmen analysieren (mit Hilfe von z.B. Impedanz-, Streulicht- und Absorptionsmessungen). Dies führt jedoch oft dazu, dass zum Beispiel bei pathologischen Proben Fehlermeldungen angezeigt werden. Im nächsten Schritt erfolgt üblicherweise eine Mikroskopie als Validierungsmethode für durch den Hämatologie-Analysator fehlerhaft bestimmten Zellen. Dieser Schritt ist aufwendig und kostenintensiv, da er neben Probenvorbereitung, Mikroskopie und weiteren manuell durchführbaren Arbeiten auch eine manuelle Bewertung erfordert.

Neben der Morphologie der Zelle kann es ebenfalls wichtig sein, das Zellvolumen zu bestimmen. Dies wird üblicherweise aufgrund der Streuung durch Granulae und polymorpher Nuklei nur bei nicht-granulären Erythrozyten und Blutblättchen vorgenommen. Deswegen wird dies in der Regel nicht für weiße Blutzellen durchgeführt.

Um z.B. eine quantitative Blutzelldiagnostik durchzuführen, kann auf einen Hämatologie-Analysator verzichtet werden und stattdessen jede Einzelzelle mikroskopiert werden. Dies erlaubt es, das Blutbild unabhängig von festgesetzten Auswertealgorithmen und Flags quantitativ zu bestimmen. Nachteil dieses Ansatzes ist jedoch der geringere Probendurchsatz als bei einem Hämatologie-Analysator und der nach wie vor bestehende Aufwand, die Zellen auf Objektträgern zu immobilisieren und zu färben. Diese Färbungen haben zudem nur eine eingeschränkte Reproduzierbarkeit und zeigen eine hohe Abhängigkeit von Luftfeuchte, Färbungsdauer, Temperatur und mehr. Nachteil bei der reinen Mikroskopie ist es, die Zellvolumina zu quantifizieren im Vergleich zu Durchflusszytometern eingesetzt bei Hämatologie-Analysatoren.

Die DE 10 2010 023 099 B3 betrifft ein Verfahren und eine Vorrichtung zum Charakterisieren von biologischen Zellen. Die Zellen werden in einem Mikrofluidiksystem berührungslos charakterisiert und dann sortiert. Zum Charakterisieren des biologischen Objekts wird ein Reiz auf dieses ausgeübt und eine Raman-Streuung gemessen. Die Raman-Streuung wird vor Ausüben des Reizes und danach erfasst.

Die US 2006/0291712 A1 beschreibt ein Verfahren zur Hilbert-Phasenmikroskopie. Dieses Verfahren wird als probates Mittel zum quantitativen Bestimmen von Zellen beschrieben.

Aus der US 8406498 ist ein bildgebendes Duchlasszytometer bekannt, wodurch die Differenzierung der weißen Blutkörper direkt bestimmt werden kann. Auch in diesem Fall kommt jedoch eine Färbung zum Einsatz, um insbesondere eosinophile und basophile Granulozyten zu unterscheiden. Somit ergeben sich auch hier die oben genannten Nachteile.

Eine der Erfindung zugrundeliegende Aufgabe ist folglich das Bereitstellen eines effizienteren und robusteren Verfahrens zum Differenzieren von Zellen.

Die Aufgabe wird von dem erfindungsgemäßen Verfahren gemäß den unabhängigen Patentansprüchen gelöst. Vorteilhafte Weiterbildungen der Erfindung sind durch die Unteransprüche gegeben.

Das erfindungsgemäße in-Vitro-Verfahren zum markierungsfreien Bestimmen eines Zelltyps einer Zelle in einer biologischen Probe wird mit Hilfe einer Mikroskopiervorrichtung und einer Zellanalyseeinrichtung durchgeführt. Eine Mikroskopiervorrichtung ist dabei ein Gerät, mit dem sehr kleine Objekte stark vergrößert betrachtet werden können, und umfasst beispielsweise ein Lichtmikroskop, ein Rasterelektronenmikroskop, ein Phasenkontrastmikroskop, ein digitales holographisches Mikroskop oder ein Mikroskop mit einem Ultraschallsensor (z.B. ein akustisches Mikroskop). Die Mikroskopiervorrichtung erfasst dabei ein Höhenprofil der Zelle gegenüber einer Trägenplatte. Ein Höhenprofil ist dabei ein Profil, das die Lage und Höhe der Zelle beschreibt, also eine topographische Information bereitstellt.

Die Zellanalyseeinrichtung, also ein Gerät oder eine Gerätekomponente, die zur elektronischen Datenverarbeitung geeignet ist und dazu eingerichtet ist, die Daten eines Höhenprofils zu verarbeiten, führt in dem erfindungsgemäßen Verfahren die folgenden Schritte durch:
- Ermitteln eines Zellkompartiments der Zelle anhand des erfassten Höhenprofils,
- Ermitteln eines vorbestimmten quantitativen Zellmerkmals anhand des ermittelten Zellkompartiments, und
- Bestimmen des Zelltyps der Zelle anhand des ermittelten quantitativen Zellmerkmals.

Als Zellkompartiment wird im Sinne der vorliegenden Erfindung der Zellbereich verstanden, der von einer Biomembran umgeben ist. Als Zellkompartiment wird im Folgenden folglich beispielsweise ein Mitochondrium, ein Zellkern, eine Vakuole, das Zytoplasma oder ein Granula verstanden, wobei ein Granula, also eine sichtbare, körnchenförmige Einlagerung der Zelle, als ein Zellkompartiment und mehrere Granulae als mehrere Zellkompartimente verstanden werden. Das erfindungsgemäße Verfahren bietet eine robuste und markierungsfreie Methode zum Bestimmen eines Zelltyps. Das erfindungsgemäße Verfahren ist gleichermaßen zum Bestimmen eines Zelltyps einer Zelle als auch zum Differenzieren von Zellen einer heterogenen Zellsuspension geeignet. Durch den ermöglichten Verzicht auf Färbeverfahren von Zellen ist das Bestimmen der Zellen nicht beeinträchtigt durch physikalische Eigenschaften des Färbestoffs. Anders als in der herkömmlichen Pre-Analytik kann bei Durchführen des erfindungsgemäßen Verfahrens auf den Einsatz von Rounding Buffers (zum Beispiel einer verdünnten SDS-Pufferlösung) verzichtet werden. Dies beugt nahezu vollständig einem Abrunden von Zellen und einem Auftreten von Artefakten vor. Bei einer Blutanalyse kann so z.B. einem Formen von Echinozyten aus Erythrozyten vorgebeugt werden. Weiterhin erlaubt das Verfahren aufgrund des Verzichts auf ein Färbeverfahren einen hohen Probendurchsatz und erlaubt eine qualitative und/oder quantitative Bestimmung von Zellen unabhängig von festgesetzten Auswertealgorithmen oder binären Statusindikatoren. Dadurch wird eine Mikroskopie mit einem hohem Probendurchsatz ermöglicht und es kann auf herkömmliche Hämatologie-Analysatoren verzichtet werden.

Das Ermitteln des vorbestimmten quantitativen Zellmerkmals erfolgt anhand des Höhenprofils, das zu einer höheren Auflösung und damit zu einer genaueren Bestimmung des Zelltyps führt.

Zusätzlich kann ein zusätzliches quantitatives Zellmerkmal genutzt werden, welches nicht auf Basis des Höhenprofils bestimmt wird, sondern z.B. anhand einer Intensität, Polarisation oder Fluoreszenz, um den Zelltyp zu bestimmen.

Eine weitere, besonders bevorzugte Verbesserung der Bestimmung der Zellcharakteristika kann dadurch erreicht werden, dass das Ermitteln des Zellkompartiments durch Bestimmen eines Zellvolumens, Ermitteln eines ersten Zellkompartiments, zum Beispiel des Zellkerns, und Ermitteln eines weiteren Zellkompartiments erfolgt. Das Ermitteln eines Zellkompartiments kann beispielsweise ein Segmentieren des Zellkompartiments umfassen. Dies stellt eine besonders bevorzugte Ausführungsform des erfindungsgemäßen Verfahrens dar. Dabei kann beispielsweise bei dem Ermitteln des zweiten Kompartiments die Region des ersten Kompartiments vernachlässigt werden.

Das quantitative Zellmerkmal kann in einer weiteren Ausführungsform des erfindungsgemäßen Verfahrens beispielsweise ein Zellvolumen, ein Volumen des Zellkompartiments, eine Zellfläche, eine Fläche des Zellkompartiments, ein Verhältnis eines Zellvolumens zu einem Zellkernvolumen, ein Verhältnis einer Zellfläche zu einer Zellkernfläche, einen Durchmesser des Zellkompartiments, eine Rundheit des Zellkompartiments, ein Umfang des Zellkompartiments, eine Anzahl des Zellkompartiments und/oder ein statistisches Merkmal eines Zellmerkmals, das anhand der jeweiligen Höhenprofile mehrere Zellen und/oder anhand der Höhenprofile mehrerer Zellkompartimente ermittelt wird, beschreiben. Dies ermöglicht eine Vielzahl von mittelbaren Charakteristika, die die Anwendungsmöglichkeiten des erfindungsgemäßen Verfahrens erhöhen.

In einer besonders bevorzugten Ausführungsform des erfindungsgemäßen Verfahrens beschreibt das quantitative Zellmerkmal ein statistisches Merkmal eines Zellmerkmals, das anhand der jeweiligen Höhenprofile mehrere Zellen und/oder anhand der Höhenprofile mehrerer Zellkompartimente ermittelt wird. Dies ermöglicht eine höhere Auflösung bei der Klassifizierung der Zellen und eine bessere Unterscheidbarkeit, insbesondere zwischen unterschiedlichen Zellen, die aufgrund herkömmlicher Methoden schwer zu differenzieren sind. Das statistische Merkmal ist dabei vorzugsweise eine Varianz des Durchmessers gleicher Zellkompartimente, zum Beispiel eine Varianz des Durchmessers der Granulae, und/oder ein mittlerer Durchmesser der Zellkompartimente, insbesondere ein mittlerer Durchmesser der Granulae als Zellkompartiment.

Darüber hinaus kann ein statistisches Merkmal auf Basis mehrerer Zellen herangezogen werden. Beispielsweise kann der mittlere Durchmesser des Zellkerns einer Vielzahl von z.B. weißen Blutkörperchen als Zellen in Verhältnis zum Durchmesser des Zellkerns der untersuchten Zelle gesetzt werden.

Bevorzugt kommt zur Erfassung der Zellmerkmale das Höhenprofil zum Einsatz, jedoch können in weiteren Ausführungsformen zusätzliche Informationen erfasst werden, welche in Abhängigkeit des Mirkroskopieverfahrens zusätzlich zur Verfügung stehen. Beispielsweise kann die Intensitätsverteilung, ein Polarisations oder Fluoreszenz-kontrast zusätzlich genutzt werden um eine bessere Differenzierung zu ermöglichen.

Besonders gute Ergebnisse bei der Differenzierung eines heterogenen Zellgemisches, die mehrere unterschiedliche Zelltypen umfasst und dabei auch Zelltypen umfasst, die schwer unterscheidbar sind, werden gemäß einer weiteren Ausführungsform des erfindungsgemäßen Verfahrens erzielt, bei dem das Bestimmen des Zelltyps anhand einer Kombination des ermittelten quantitativen Zellmerkmals mit einem weiteren ermittelten quantitativen Zellmerkmal erfolgt.

Vorzugsweise erfolgt dabei das Bestimmen des Zelltyps der Zelle in einem ersten Klassifizierungsschritt der Zelle anhand der Kombination der Anzahl des Zellkompartiments und dem Verhältnis der Zellfläche sowie der Fläche des Zellkompartiments und in einem weiteren Klassifizierungsschritt anhand der Kombination einer Varianz des Durchmessers des Zellkompartiments und einem mittleren Durchmesser des Zellkompartiments. Diese Ausführungsform des erfindungsgemäßen Verfahrens bewährt sich insbesondere bei komplizierten Zellsuspensionanalysen, zum Beispiel bei einem Differenzialblutbild, bei dem zum Beispiel weiße Blutkörperchen unterschieden werden.

Das Erfassen des Höhenprofils erfolgt vorzugsweise durch ein Überlagern einer Objektwelle mit einer Referenzwelle, einem Aufnehmen eines resultierenden Interferogramms und/oder einer mathematischen Rekonstruktion, z.B. mittels einer Phasenkontrastmikroskopie. Diese besonders vorteilhafte Ausführungsform des erfindungsgemäßen Verfahrens eignet sich besonders für das Bestimmen von quantitativen Merkmalen, vor allem begünstigt es eine markierungsfreie Differenzialblutanalyse. Die durch die Phasenkontrastmikroskopie gewonnenen Bilder sind besonders gut reproduzierbar und weisen eine hohe Auflösung auf.

Besonders vorteilhaft ist dabei die Anwendung der digitalen holographischen Mikroskopie, da sie erlaubt die Phaseninformation des Objekts quantitativ zu erfassen. Gemäß einer weiteren Ausführungsform des erfindungsgemäßen Verfahrens wird das Höhenprofil daher mittels digitaler holographischer Mikroskopie, Interpherenzphasenmikroskopie und/oder quantitativer Phasenmikroskopie ermittelt. Diese Mikroskopiemethoden ermöglichen eine besonders hohe axiale Auflösung, d.h. in Richtung der optischen Achse des Mikroskops. Eine digitale holographische Mikroskopie ermöglicht eine Auflösung von bis zu 1nm in z-Richtung. Dies entspricht einer Präzision die um einen Faktor 100-1000 höher liegt als mit anderen bekannten lichtmikroskopischen Verfahren (z.B. konfokales Mikroskop). Aufgrund der präzisen Ermittlung des Höhenprofils ist somit eine genauere Bestimmung des Zelltyps möglich.

Ein weiterer Vorteil wird erzielt, wenn das Verfahren mit einer oder mehreren ungefärbten und/oder ungetrockneten Zellen durchgeführt wird. Da die Vitalität der Zellen durch das erfindungsgemäße Verfahren nicht beeinträchtigt wird, können die durch das Verfahren bestimmten Zellen nach Abschluss des Bestimmungsverfahrens für Folgeanalysen weiterverwendet werden.

Das erfindungsgemäße Verfahren kann gemäß einem weiteren Ausführungsbeispiel ein Phänotypisieren der Zelle mit einem Marker und/oder das Exprimieren eines vorbestimmten Rezeptors zum weiteren Zuordnen der Zelle umfassen. Dies ermöglicht eine weitergehende molekularbiologische Untersuchung der bestimmten Zelle.

Eine besondere Relevanz erhält das erfindungsgemäße Verfahren, wenn es gemäß einer weiteren Ausführungsform anhand einer Vollblutprobe durchgeführt wird und/oder die biologische Probe Blutzellen, Leukozyten, Eosinophile und/oder basophile Leukozyten umfasst. Dies findet vor allem bei der Bestimmung eines Blutbildes in der Hämatologie Anwendung.

Bei einer weiteren Ausführungsform kann das Bestimmen des Zelltyps zum Differenzieren von Neutrophilen, Eosinophilen, Basophilen Lymphozyten und/oder Monozyten erfolgt, und/oder ein Bestimmen einer Zellfunktionalität umfassen, insbesondere ein Bestimmen eines Aktivierungszustandes einer Zelle, z.B. eines Thrombozyten, und/oder einen Nachweis von einer Zelle, z.B. einem deformierten Erythrozyten und/oder einer pathogen-befallenen Zelle.

Gemäß einer weiteren Ausführungsform des erfindungsgemäßen Verfahrens kann das Bestimmen des Zelltyps ein Bestimmen eines Zellstadiums der Zelle umfassen, insbesondere zum Differenzieren eines Zellalters, eines physiologischen oder mor-phologischen Zustands der Zelle oder eines Aktivitätszustands der Zelle. Dies ermöglicht ein Aufnehmen einer Bildsequenz von z.B. Aktivierungsvorgängen einer Zelle.

Die Erfindung wird anhand der beigefügten Zeichnungen noch einmal durch konkrete Ausführungsbeispiele näher erläutert. Die gezeigten Beispiele stellen bevorzugte Ausführungsformen der Erfindung dar. Funktionsgleiche Elemente weisen in den FIGUREN dieselben Bezugszeichen auf. Es zeigen:
- FIG 1: eine Skizze zu den fünf wesentlichen Zelltypen einer weißen Blutzellpopulation,
- FIG 2: eine schematische Skizze zu einer Ausführungsform des erfindungsgemäßen Verfahrens,
- FIG 3: eine schematische Darstellung des Ermittelns eines Zellkompartiments und des Ermittelns eines vorbestimmten quantitativen Zellmerkmals gemäß einer Ausführungsform des erfindungsgemäßen Verfahrens,
- FIG 4a, 4b: eine schematische Skizze zum Bestimmen des Zelltyps der Zelle anhand ermittelter quantitativer Zellmerkmale.

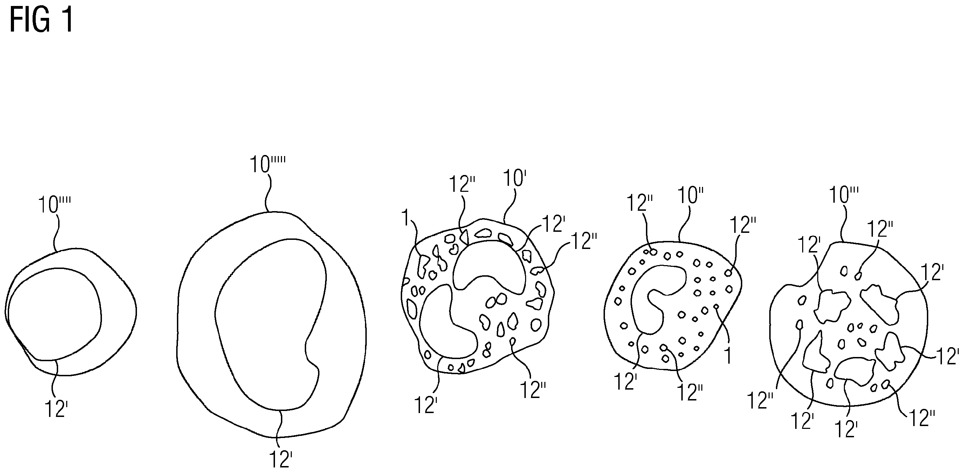

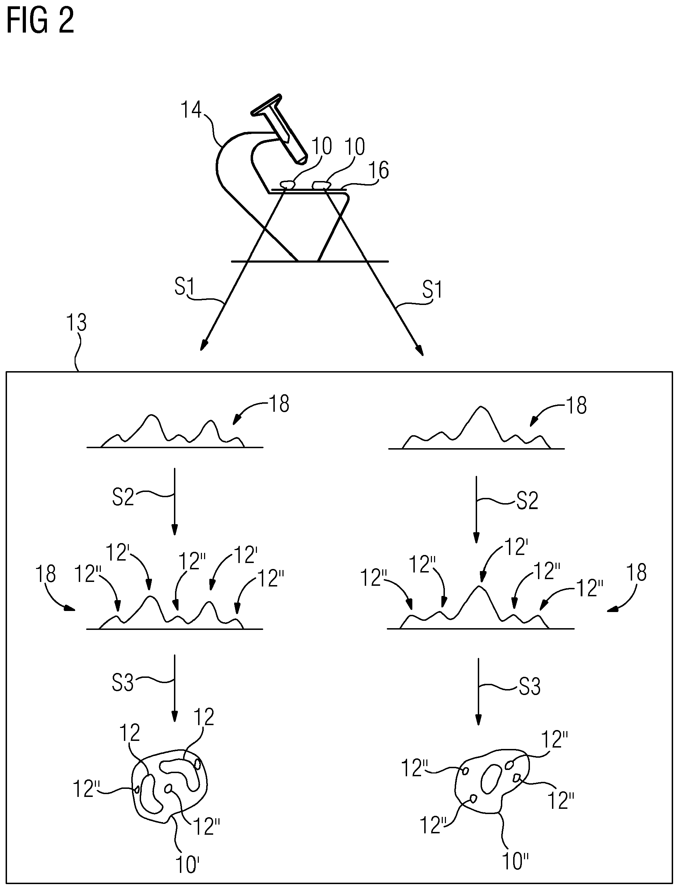

Mit Hilfe des erfindungsgemäßen In-Vitro-Verfahrens kann ein markierungsfreies Bestimmen eines Zelltyps einer Zelle in einer biologischen Probe erfolgen. Markierungsfrei bedeutet hier, dass die Zellen nicht durch beispielsweise Fluoreszenzfarbstoffe oder radioaktive Partikel markiert werden müssen. Eine biologische Probe kann dabei beispielsweise eine Probe tierischer oder pflanzlicher Zellen, bakterieller Zellen und/oder Einzellern umfassen. Vorzugsweise handelt es sich dabei um eine Vollblutprobe, die zum Beispiel Blutzellen 10, z.B. Leukozyten, eosinophile Granulozyten oder basophile Granulozyten umfasst. Aus Gründen der Übersichtlichkeit sind die unterschiedlichen beispielhaften Zelltypen sowohl in der FIG 1, als auch in den FIG 2, 3, 4a und 4b, mit den folgenden Bezugszeichen gekennzeichnet: eosinophile Granulozyten 10', basophile Granulozyten 10", neutrophile Granulozyten 10''', Lymphozyten 10"" und Monozyten 10""'. In der folgenden Beschreibung der Ausführungsbeispiele wird jedoch das Bezugszeichen 10, aus Gründen der Lesbarkeit, einheitlich für jeden Zelltyp verwendet.

Am Beispiel der FIG 1 sind beispielhaft fünf wesentliche weiße Blutzellen dargestellt, die bei einem kleinen Blutbild differenziert werden. Die weißen Blutzellen umfassen granuläre Zellen 10, zum Beispiel eosinophile Granulozyten 10, basophile Granulozyten 10 und neutrophile Granulozyten 10. Zu den nicht-granulären Zellen 10 gehören Lymphozyten 10 und Monozyten 10. In der FIG 1 ist beispielhaft von jedem Zelltyp eine Zelle 10 gezeigt. Die beispielhaften nicht-granulären Zellen 10 weisen jeweils einen Zellkern 12 auf. Die verbleibenden beispielhaften Granulozyten 10 weisen unregelmäßig gelappte Zellkerne 12 auf, sind also polymorphnuklear. Den granulären Zellen 10 ist gemein, dass sie in ihrem Inneren z.B. mehrere Granulae 12" aufweisen. Der Übersichtlichkeit halber sind in der FIG 1 in diesen Zellen nur einige der Granulae 12" mit Bezugszeichen gekennzeichnet. Die weißen Blutkörperchen 10 unterscheiden sich ebenfalls in der Zellgröße.

Sowohl der Zellkern 12' als auch die Granulae 12" sind in diesem Ausführungsbeispiel nur beispielhaft als Zellkompartimente 12 angeführt. Alternative Zellkompartimente 12 sind beispielsweise ein Mitochondrium, eine Vakuole, ein Zytoplasma oder ein endoplasmatisches Retikulum.

In der FIG 2 ist schematisch das Prinzip eines Ausführungsbeispiels des erfindungsgemäßen Verfahrens dargestellt. Die FIG 2 zeigt eine Mikroskopiervorrichtung 14, die dazu ausgelegt ist, eine Topographie, d.h. eine Höheninformation einer Zelle präzise zu bestimmen. Die Auflösung der Höheninformation beträgt mindestens 1 Mikrometer, vorzugsweise 100 Nanometer oder weniger als 100 Nanometer, besonders bevorzugt 10 Nanometer oder weniger als 10 Nanometer. Vorzugsweise umfasst die Mikroskopiervorrichtung 14, wie im Beispiel der FIG 2, ein digitales holographisches Mikroskop.

Die digitale holographische Mikroskopie (DHM), auch Interferenzphasenmikroskopie genannt, zeichnet sich dadurch aus, dass sie sowohl die Intensität als auch die Phase eines Objekts quantitativ in einer Aufnahme erfassen kann. Dafür wird nicht, wie in der Mikroskopie üblich, eine Intensitätsverteilung aufgenommen, welche sich durch Absorption und Streuung von Licht am Objekt ergibt, sondern eine Wellenfront, welche sich aus der Überlagerung einer Objekt- und einer Referenzwelle ergibt. Daraus kann mit Hilfe eines Computers die Intensitäts- und Phaseninformation des Objekts rekonstruiert werden.

Diese Mikroskopie-Methode eignet sich für die Untersuchung von biologischen Proben, da diese ohne weitere Probenvorbereitung im wesentlichen transparent sind für sichtbares Licht und damit in einem herkömmlichen Mikroskop einen geringen Kontrast aufweisen. Durch die Aufnahme der Phaseninformation ist es möglich, die Morphologie der Zelle sehr präzise zu erfassen und mit Hilfe dieser Information eine Differenzierung der Zelle vorzunehmen.

Gegenüber herkömmlichen Phasenkontrastmikroskopen, welche üblicherweise durch einen Phasenring im Objektiv und eine Ringblende im Kondensor realisiert werden, bietet die DHM den Vorteil, dass die Phase quantitativ bestimmt werden kann. Entsprechend spricht man auch von quantitativer Phasenkontrastmikroskopie. Erst durch die Quantifizierung der Phase wird eine reproduzierbare Rekonstruktion des Höhenprofils des Objekts ermöglicht und erst dadurch kann eine automatisierte Bestimmung des Zelltyps erfolgen.

Es ist darauf hinzuweisen, dass die Phasenverschiebung des Lichts, von der optischen Weglänge durch das Objekt bestimmt ist, d.h. sowohl die geometrische Dicke des Objekt als auch der Brechungsindex spielt dabei eine Rolle. Um ein echtes geometrisches Höhenprofil aus der Phaseninformation zu erhalten muss der Brechungsindex der Probe bekannt sein. Im bevorzugten Anwendungsfall der Mikroskopie von Zellen kann man jedoch von einem weitestgehend konstanten und bekannten Brechungsindex ausgehen, wodurch die Phaseninformation direkt in ein Höhenprofil umgerechnet werden kann. Alternativ kann die Phaseninformation bei verschiedenen Wellenlängen aufgenommen werden und dadurch der Einfluss des Brechungsindex herausgerechnet werden.

Weiterhin ist zu beachten, dass die Phaseninformation nur auf einen Phasenwinkel von 360° eindeutig bestimmt ist. Eine gemessene Phasenverschiebung von beispielsweise 10° kann in Wirklichkeit einer Phasenverschiebeung von 370°, 730°, usw. entsprechen. Der Eindeutigkeitsbereich ist demnach auf die Wellenlänge des Lichts beschränkt. Diese Limitierung ist im gewählten Anwendungsfall bei der mikroskopischen Betrachtung von Zellen ebenfalls vernachlässigbar, da biologische Zellen keine steilen Flanken aufweisen und somit die Phasenwerte der benachbarten Pixel als Anschlussbedingung zur Verfügung stehen.

Mit Hilfe der Mikroskopiervorrichtung 14 wird ein Höhenprofil 18 einer jeweiligen Zelle 10 erfasst (Verfahrensschritt S1), welches z.B. aus einem digitalen Hologramm Höhenprofil oder einem Interferogramm ermittelt wird. Umfasst die Mikroskopiervorrichtung 14 z.B. ein akustisches Mikroskop, kann das Höhenprofil aus einem Sonogramm ermittelt werden. Beispielsweise umfasst der Verfahrensschritt S1 eine Aufnahme eines Hologramms, eine iterative Rekonstruktion der Phasen- und/oder Intensitätsinformation des Objekts und/oder eine Konversion der Phaseninformation in ein Höhenprofil.

Beispielhaft sind hier zwei Zellen 10 auf einer Trägerplatte 16 gezeigt. Das Erfassen des Höhenprofils 18 umfasst das Erfassen einer Zellkontur, also eines Höhenverlaufs der Zelloberfläche in Bezug auf die Trägerplatte 16. Die Trägerplatte 16 kann dabei beispielsweise einen Objektträger oder ein anderes, dem Fachmann gängiges Substrat für mikroskopische Untersuchungen umfassen. Für eine Hochdurchsatz-Mikroskopie kann auch ein kontinuierliches Band, beispielsweise bestehend aus einem Polymer, zum Einsatz kommen, welches kontinuierlich unter dem Objektiv durchgezogen wird. Die FIG 2 zeigt zusätzlich eine Zellanalyseeinrichtung 13, die die Verfahrensschritte S2 und S3 durchführt.

Im hier beschriebenen Ausführungsbeispiel erfolgt ein Bestimmen der beispielhaften Zellen 10, zum Beispiel ein Differenzieren von weißen Blutkörperchen, das beispielsweise auf einer rekonstruierten Phaseninformation der Zellen 10 basiert. Hierzu werden zunächst ein oder mehrere Zellkompartimente 12 der Zelle 10 anhand des erfassten Höhenprofils 18 ermittelt (S2). Im Beispiel der FIG 2 zeigt das linke Höhenprofil 18 der ersten beispielhaften Zelle 10 zwei markante Erhöhungen auf, die beispielsweise auf das Vorhandensein von einem polymorphen Zellkern 12' hinweisen. Zusätzlich sind beispielsweise drei kleinere Erhebungen des Höhenprofils 18 zu sehen, die auf drei Granulae 12" hinweisen. Im Vergleich hierzu weist das Höhenprofil 18 der zweiten Zellen 10 auf einen mononuklearen Zellkern 12' und auf vier Granulae 12" hin. In dem weiteren Verfahrensschritt S3 erfolgt das Ermitteln eines vorbestimmten quantitativen Zellmerkmals, z.B. einer Anzahl eines der Zellkompartimente 12 oder eines Durchmessers eines der Zellkompartimente 12, anhand des ermittelten Zellkompartiments 12. Es folgt das Bestimmen des Zelltyps der Zelle 10 anhand des qualitativen Zellmerkmals (S3). Im Beispiel der FIG 2 wird so anhand des Höhenprofils 18 beispielsweise ein eosinophiler Granulozyt 10 (links im Bild) und ein basophiler Granulozyt 10 (rechts im Bild) bestimmt.

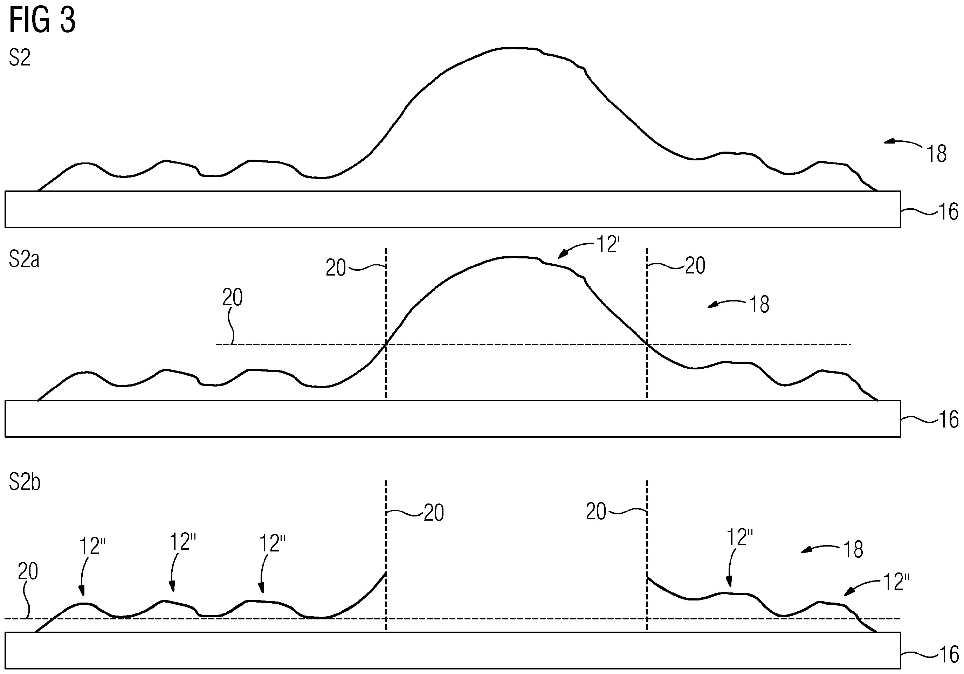

Die FIG 3 zeigt eine schematische Darstellung eines Durchführens des Ermittelns des Zellkompartiments 12 (S2). Ganz oben im Bild ist dazu ein beispielhaftes Höhenprofil 18 einer Zelle 10 auf einer Trägerplatte 16 dargestellt. In einem ersten Schritt wird hierzu zum Beispiel ein Zellvolumen der Zelle 10 bestimmt. Methoden zum Bestimmen des Zellvolumens anhand eines Höhenprofils sind dem Fachmann aus dem Stand der Technik bekannt (z.B. Integration bzw. Aufsummation der Höhe über die gesamte Fläche der Zelle). Die Fläche der Zelle kann dabei beispielsweise auf Basis eines Schwellwertes im Absorptionskontrast oder im Höhenprofil erfolgen.

Bei einem weiteren Zwischenschritt S2a (siehe mittlere Abbildung der FIG 3) wird ein anschließendes Segmentieren eines der Zellkompartimente 12, im vorliegenden Beispiel des Zellkerns 12' als erstes Zellkompartiment 12, gezeigt. Das Segmentieren erfolgt basierend auf der Höheninformation für dieses Zellkompartiments 12. Das Segmentieren kann beispielsweise durch das Bereitstellen eines Interferogramms durch eine Phasenkontrastmethodeerfolgen. Bei einem Verwenden einer alternativen Mikroskopiervorrichtung 14 kann das Bereitstellen des Höhenprofils z.B. ein Lasern, ein Rastern oder ein Ultraschall-gebundenes Abtasten umfassen. Die mittlere Abbildung der FIG 3 zeigt dabei zwei Hilfslinien 20, wobei die beiden senkrechten Hilfslinien 20 das das beispielhafte erste Zellkompartiment 12' beschreibende Segment des Höhenprofils 18 eingrenzen und wobei die waagerechte Hilfslinie 20 einen vorbestimmten Schwellenwert markiert, der beispielsweise einen Wert von 50 Prozent der Höhe des ersten Zellkompartiments 12' beschreibt. Für den verbleibenden Teil der Zelle 10 wird beispielsweise aus der mittleren Höhe und beispielsweise der maximalen Höhe des segmentierten Bereichs dieser Schwellenwert berechnet, um damit beispielsweise einen Durchmesser des Zellkompartiments 12 oder der weiteren Zellkompartimente 12 und deren Anzahl zu bestimmen. Zum Segmentieren des ersten Zellkompartiments 12 kann der Fachmann mehrere Standardverfahren anwenden, wie zum Beispiel das Bestimmen einer mittleren Höhe mit Hilfe einer Matrix mit Bildpunkten und einem Höhenwert. Zusätzlich kann bei der Berechnung ein eine gekippte Ebene der Trägerplatte 16 beschreibender Winkel berücksichtigt werden.

Mit anderen Worten kann man z.B. verschiedene Zellkompartimente 12 mit verschiedenen Schwellwerten oder Auswahlkriterien segmentieren. Zur Bestimmung eines weiteren Zellkompartiments 12 berücksichtigt man die Fläche des ersten Kompartiments nicht weiter. Ist beispielsweise das erste Zellkompartiment 12 der Zellkern 12' und ist das zweite Zellkompartiment ein Granula 12" oder mehrere Granulae 12", kann man z.B. bei einer zweiten Segmentierung davon ausgehen, dass am Ort des Zellkerns 12' keine Granulae 12" sind.

Im Verfahrensschritt S2b (FIG 3 unten) ist das Ermitteln des Zellkompartiments 12 gezeigt. Hierzu kann beispielsweise ein weiterer Kontrastmechanismus eingezogen werden, indem eine weitere Basislinie 22 ermittelt wird. Diese weitere Basislinie 22 kann beispielsweise einen weiteren Schwellenwert für ein weiteres Zellkompartiment 12 repräsentieren. Im vorliegenden Beispiel wird beispielsweise ein Schwellenwert gewählt, um zum Beispiel ein oder mehrere Granulae als Zellkompartimente 12" zu ermitteln. Hierdurch kann beispielsweise eine Anzahl, ein Durchmesser und/oder eine mittlere Größe von Granulae ermittelt werden. Alternativ oder zusätzlich kann beispielsweise eine Anzahl des Zellkompartiments 12" pro Zellfläche ermittelt werden.

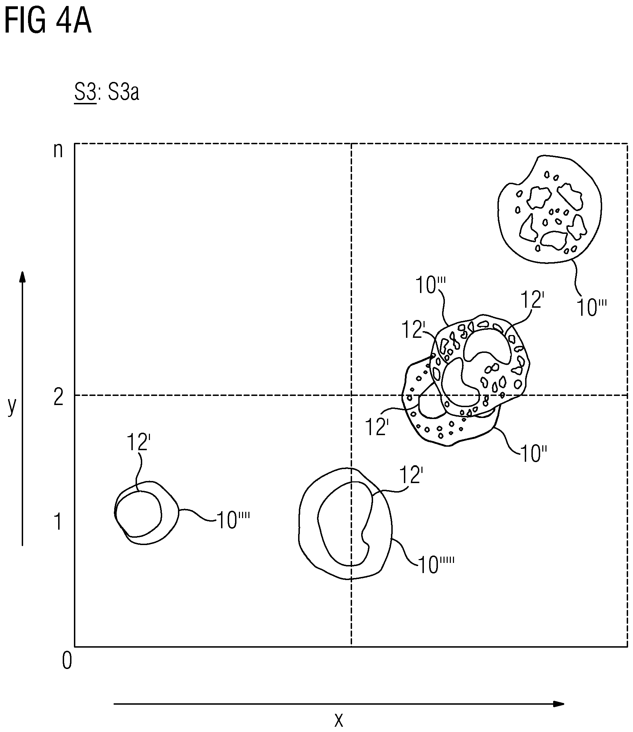

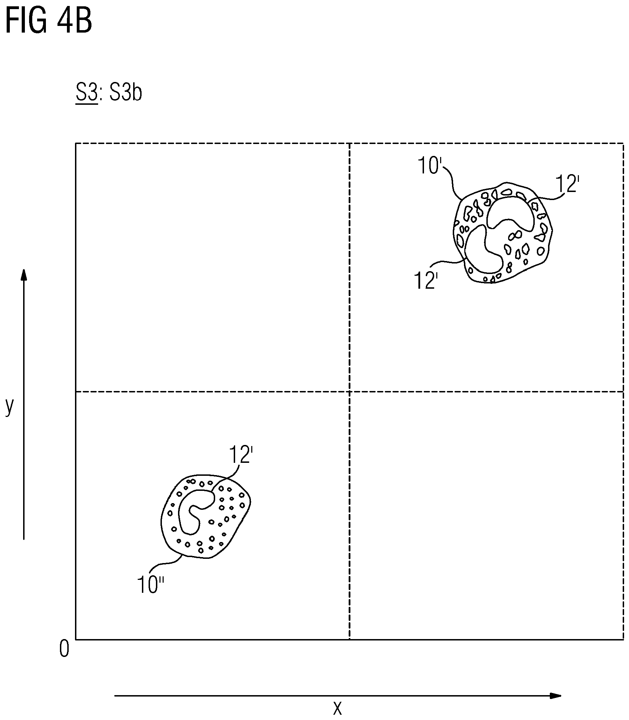

Im vorliegenden Ausführungsbeispiel wird beispielhaft durch eine Anzahl eines Zellkerns, ein Verhältnis einer Zellfläche zu einer Fläche des Zellkerns, ein mittlerer Durchmesser der Granulae und eine Varianz des Durchmessers der Granulae quantitative Zellmerkmale bestimmt. Alternativ oder zusätzlich können beispielsweise ein Zellvolumen, ein Volumen des Zellkompartiments, eine Zellfläche, eine Fläche des Zellkompartiments, ein Verhältnis eines Zellvolumens zu einem Zellkernvolumen mittels quantitativer Zellmerkmale erfasst werden. Die FIG 4a und die FIG 4b zeigen das Bestimmen des Zelltyps der Zelle 10 anhand des ermittelten quantitativen Zellmerkmals. Die FIG 4a zeigt dabei eine Matrix zum Klassifizieren einer Zelle 10 oder mehrerer Zellen 10, deren Ordinate Y beispielsweise eine Anzahl des Referenzkompartiments 12, zum Beispiel eine Gelapptheit eines Zellkerns 12', bezeichnet, und deren Abszisse X beispielsweise ein Verhältnis einer Zellfläche zu einer Fläche des Zellkerns bezeichnet. Zur Veranschaulichung der Klassifizierung sind zusätzlich gestrichelte Hilfslinien 20 dargestellt. Werden die Zellen 10 des beispielhaften Zellgemischs gemäß der genannten beispielhaften quantitativen Zellmerkmale in die Matrix eingeordnet, so lässt sich das Bestimmen vorhandener Lymphozyten 10, Monozyten 10 und neutrophilen Granulozyten 10 eindeutig bestimmen. Ein weiteres Cluster wird beispielsweise von basophilen Granulozyten 10 und eosinophilen Granulozyten 10 gebildet.

Bereits im gezeigten Verfahrensschritt S3a lassen sich beispielhaften Granulozyten deutlich voneinander unterscheiden. Eine Verbesserung der Unterscheidung der beispielhaften basophilen Granulozyten 10 und eosinophilen Granulozyten 10 lässt sich erreichen, indem eine weitere Klassifizierung gemäß weiterer quantitativer Zellmerkmale erfolgt. Dies ist in der FIG 4b gezeigt. Als besonders vorteilhaft hat sich dabei erwiesen, wenn die beispielhaften beiden weiteren quantitativen Zellmerkmale ein statistisches Merkmal eines Zellmerkmals, das anhand der jeweiligen Höhenprofile mehrerer Zellen 10 ermittelt wird, beschreibt. Im Beispiel der FIG 4b ist zum Beispiel eine Varianz eines Durchmessers der Granulae auf der Ordinate Y aufgetragen, während ein mittlerer Durchmesser der Granulae auf der Abszisse X aufgetragen ist. Die Matrix, die auch hier durch gestrichelte Linien eine Klassifizierung erleichtern soll, zeigt deutlich eine Auftrennung der Zellen 10.

Das oben beschriebene Ausführungsbeispiel kann beispielsweise zur Bestimmung der Zellfunktionalität der Zelle 10 erfolgen, insbesondere als ein Bestimmen der Funktionalität z.B. eines weißen Blutkörperchens und/oder einer nicht-peripheren Blutzelle und/oder einer pathogen befallenen Zelle 10. Die Funktionalität eines weißen Blutkörperchens kann beispielsweise anhand der Änderung des Volumens, der Änderung der Anzahl der Granulae und/oder der Veränderung des Zellkerns bestimmt werden. Beispiele von nicht-peripheren Blutzellen 10 sind beispielsweise Knochenmarkszellen und unreife Zellen. Weiterhin kann das beschriebene Verfahren beispielsweise im Rahmen einer Lavage bei zum Beispiel einer Infektion oder einer Untersuchung von Liquor bei einer Infektion erfolgen. Dies ermöglicht auch eine markierungsfreie Feststellung einer parasitären Infektion, wie zum Beispiel das Feststellen von Malariaparasiten in Erythrozyten in definierten Zellzyklenstadien, wobei eine frühere Diagnose erwünscht ist.

Alternativ oder zusätzlich kann das Bestimmen des Zelltyps eine Bestimmung eines Zellstadiums der Zelle 10 umfassen, insbesondere zum Differenzieren eines Zellalters, beispielsweise des Alters von granulären neutrophilen Granulozyten, wobei zum Beispiel eine Verschiebung in der Klassifizierungsmatrix bei z.B. jungen stabförmigen Neutrophilen im Vergleich zu reifen runden Neutrophilen auftritt. Weiterhin kann ein physiologischer oder ein morphologischer Zustand einer Zelle 10 bestimmt werden, zum Beispiel im Rahmen eines Nachweises von einem pathologischen Blutbefund durch übersegmentierte Nuklei von neutrophilen Granulozyten durch zum Beispiel einen Eisenmangel. Ein weiteres Beispiel ist der Nachweis von zum Beispiel deformierten Erythrozyten, zum Beispiel Echinozyten bei zum Beispiel Vorliegen einer Sichelzellenanämie. Ein weiteres Beispiel ist das Bestimmen des Zelltyps im Rahmen einer Größenverteilung von Erythrozyten zum Unterscheiden von Retikulozyten, also jungen Erythrozyten. Ein Differenzieren von zum Beispiel ruhenden und/oder aktivierten Thrombozyten durch eine Änderung der Morphologie kann ebenfalls im Rahmen des beschriebenen erfindungsgemäßen Verfahrens durchgeführt werden.

Durch das erfindungsgemäße Verfahren kann eine gegenwärtig angewendete Vorgangsweise zum Erstellen eines Differenzialblutbilds markierungsfrei durchgeführt werden. Eine beispielhafte Vorgehensweise zum Erstellen eines Differenzialblutbilds umfasst zum Beispiel das Ermitteln einer Zellgröße, eines Reifungszustandes der Zelle, also eines Alters der Zelle, ein Kernplasmaverhältnis, das Erfassen von Zytoplasmaeinschlüssen und das Erfassen einer chromatinen Struktur.

Das oben genannte Ausführungsbeispiel verdeutlicht das erfindungsgemäße Prinzip, mit Hilfe eines von einer Mikroskopiervorrichtung erfassten Höhenprofils 18 mindestens ein Zellkompartiment 12 der Zelle 10 zu erfassen und anhand des ermittelten Zellkompartiments 12 und/oder des Höhenprofils 18 ein quantitatives Zellmerkmal zu ermitteln.

Im Idealfall wird dabei eine automatisierbare und markierungsfreie Mikroskopietechnik eingesetzt, um Probenvorbereitungsschritte, wie zum Beispiel ein Färben von Zellen 10, zu minimieren und zudem eine markierungsfreie Bestimmung eines quantitativen Zellmerkmals, zum Beispiel einer Volumenbestimmung der Zelle 10, zu ermöglichen. Vorzugsweise wird dabei eine Interferenzphasenmikroskopie bzw. digitale holographische Mikroskopie eingesetzt, die beispielsweise eine markierungsfreie Differenzialblutbilduntersuchung zum Beispiel weißer Blutzellen 10 ermöglicht, da es zur Differenzierung von zum Beispiel eosinophilen und basophilen Granulozyten 10, zum Beispiel die Granularität, Zellkernmorphologie und die Zellvolumina heranziehen kann. Dies stellt gleichzeitig die größte Herausforderung dar bei der Differenzierung von zum Beispiel weißen Blutzellepopulationen.

Basierend auf zum Beispiel der Morphologie der Zelle 10 können verschiedene Zelltypen unterschieden werden. Während die Unterscheidung von zum Beispiel Lymphozyten, Monozyten und Neutrophilen aufgrund von zum Beispiel ihrer unterschiedlichen Größe und Zellkernmorphologie sehr leicht unterscheidbar sind, wird an die Differenzierung von zum Beispiel eosinophilen und basophilen Granulozyten eine erhöhte Anforderung gestellt.

Zum Differenzieren wird dabei eine topographische Information mittels zum Beispiel einer digitalen holografischen Mikroskopie (DHM) herangezogen. In einem ersten Schritt wird basierend auf der Höheninformation ein Zellkompartiment 12, zum Beispiel ein Zellkern 12', segmentiert. Anschließend wird für den verbleibenden Teil der Zelle 10 aus zum Beispiel der mittleren Höhe und zum Beispiel der maximalen Höhe des segmentierten Bereichs ein Schwellenwert berechnet (zum Beispiel 50 Prozent), um damit zum Beispiel einen Durchmesser zum Beispiel der Granulae und deren Anzahl zu bestimmen (FIG 3). Aus diesem Parameter kann dann die Differenzierung abgeleitet werden (FIG 4a, FIG 4b). Beispielsweise eine Größe und eine Form eines Zellkerns 12' können herangezogen werden, um beispielsweise Lymphozyten, Monozyten, neutrophile, eosinophile und basophile Granulozyten zu unterscheiden (FIG 4a). Folgende quantitative Zellmerkmale können dafür beispielsweise herangezogen werden: Ein Verhältnis von Volumen der Zelle 10 zu Volumen des Zellkerns 12', eine Anzahl und/oder Volumen von zum Beispiel polymorphen Zellkernen 12', eine Information über Anzahl, Durchmesser und Größenverteilung zum Beispiel der Granulae, die dann zur Unterscheidung von zum Beispiel eosinophilen und basophilen Granulozyten genutzt werden (siehe FIG 4b).

Die Interferenzphasenmikroskopie, auch digitale holografische Mikroskopie (DHM) genannt, zeichnet sich dadurch aus, dass sie sowohl eine Intensität als auch eine Phase eines Objektes quantitativ in einer Aufnahme erfassen kann. Dafür wird nicht, wie in der Mikroskopie üblich, ein Abbild des Objekts erfasst, sondern eine Wellenfront, welche sich aus der Überlagerung einer Objekt- und einer Referenzwelle ergibt. Daraus kann mit Hilfe einer Zellanalyseeinrichtung, zum Beispiel eines Computers, eine Intensitäts- und Phaseninformation des Objekts rekonstruiert werden.

Diese Mikroskopie-Methode eignet sich für eine Untersuchung von biologischen Proben, da diese ohne weitere Probenvorbereitung im Wesentlichen transparent sind für sichtbares Licht und damit in einem herkömmlichen Mikroskop einen geringeren Kontrast aufweisen. Durch die Aufnahme der Phaseninformationen ist es möglich, die Morphologie der Zelle 10 sehr präzise zu erfassen und mit Hilfe dieser Informationen eine Differenzierung der Zelle 10 vorzunehmen.

Eine Differenzierung von zum Beispiel weißen Blutkörperchen basierend auf zum Beispiel einer rekonstruierten Phaseninformation von mehreren Zellen 10 kann ausgeführt werden, ohne dass eine Färbung der Zellen 10 nötig ist und dass dadurch mit frischen, nicht getrockneten Zellen gearbeitet werden kann. Dadurch werden unnötige Artefakte, welche durch unterschiedliche Handhabung der Proben während des Trocknens und Färbens entstehen, vermieden. Die Bilder sind dabei reproduzierbarer und leichter durch eine automatische rechnergestützte Bildverarbeitung unterscheidbar. Die Anzahl der Prozessschritte wird minimiert. Dadurch werden Kosten und Zeit eingespart und eine zuverlässige und schnellere Diagnostik ermöglicht.

In der Pre-Analytik kann so gegenüber der Hämatologie-Analysatoren auf den Einsatz von zum Beispiel Rounding Buffers verzichtet werden (das heißt hochverdünnte SDS-Pufferlösung). Eine solche würde zum Abrunden von Zellen führen, die zwar für die Streulichtmessung beim Durchflusszytometer geeignet ist, aber gleichzeitig zu Artefakten führt. Beispielsweise reagieren Erythrozyten sehr empfindlich und formen Echinozyten.

Die Erfindung umfasst folgenden Aspekt: Eine Methode zur Differenzierung von Blutkörperchen, basierend auf
a) der Aufnahme eines Interferogramms des Objekts,
b) Rekonstruktion der Phaseninformationen des Objekts und
c) Prozessierung der Phasenbilder zur Unterscheidung der verschiedenen Blutkörperchen.

Merkmale für weitere abhängige Aspekte umfassen:
- Entstehen des Interferogramms durch Überlagerung der Objektwelle mit einer Referenzwelle
- Nutzen der Phaseninformation, um zum Beispiel das Volumen einer ganzen Zelle 10 beziehungsweise einzelner Segmente der Zelle 10 zu bestimmen,
- Verwenden nicht gefärbter und nicht getrockneter Blutkörperchen,
- bei den beispielhaften, zu unterscheidenden Blutkörperchen handelt es sich zum Beispiel um Leukozyten,
- bei den beispielhaften, zu unterscheidenden Leukozyten handelt es sich zum Beispiel um Eosinophile und Basophile,
- zur Unterscheidung wird zum Beispiel das Verhältnis von Zellvolumen zu Zellkernvolumen herangezogen,
- zur Unterscheidung wird zum Beispiel ein Durchmesser des Zellkompartiments 12, zum Beispiel mehrere Granulae, herangezogen,
- zur Unterscheidung wird zum Beispiel eine Anzahl der Zellkompartimente 12, zum Beispiel der Granulae, herangezogen,
- eine Unterscheidung wird zum Beispiel in einem mehrstufigen Prozess erreicht, zum Beispiel zuerst auf Basis des Zellkernvolumens und anschließend zum Beispiel auf Basis einer Granulae-Information,
- eine Kombination aus zum Beispiel Interferenzmikroskopie und Immunphänotypisierung mit zum Beispiel Markern bestehend aus zum Beispiel Antikörpern und Nanopartikeln, zum Beispiel einem kontrastgebenden Partikel aus zum Beispiel Gold, Magnetit oder Silica; zusätzlich oder alternativ einer Expression von zum Beispiel definierten Rezeptoren zur weiteren Differenzierung des Zelltyps.

Über eine beispielhafte Differenzierung von zum Beispiel eosinophilen und basophilen Granulozyten hinausgehend umfasst die Erfindung folgende Aspekte:
- eine Mikroskopie von zum Beispiel mehreren Zellen 10 zum Beispiel direkt in einem Blutplasma, vorzugsweise nahe von In-Vivo-Bedingungen; zum Beispiel Citratblut, heparinisiertes Blut, EDTA-Blut zur Verhinderung der Blutgerinnung,
- eine Aktivierung der zum Beispiel granulären Zellen 10 ohne Markierung kann mikroskopiert werden (beispielsweise das Verändern von zum Beispiel Granulae 12", die beispielsweise von Granulozyten 10 ausgeschüttet werden),
- eine Differenzierung zum Beispiel eines Alters von zum Beispiel granulären Neutrophilen kann ohne Markierung erreicht werden ("Linksverschieben", entspricht jungen starkkernigen Neutrophilen)
- ein Nachweis von einem pathologischen Blutbefund durch zum Beispiel übersegmentierte Nuklei von Neutrophilen durch zum Beispiel Eisenmangel (Diktion: "Rechtsverschiebung"),
- Nachweis von zum Beispiel deformierten Erythrozyten (zum Beispiel Echinozyten, Sichelzellen-Anämie),
- eine Größenverteilung von zum Beispiel Erythrozyten zur Unterscheidung von Retikulozyten (junge Erythrozyten),
- eine Differenzierung von ruhenden und aktivierten Thrombozyten durch Änderung der Morphologie,
- Mikroskopie von zum Beispiel nicht-peripheren Blutzellen (zum Beispiel Knochenmark; unreife Zellen), Lavage (Infektionen), Liquor (Infektionen),
- eine markierungsfreie Feststellung einer parasitären Infektion (zum Beispiel Malaria, also Parasiten in Erythrozyten in definierten Zellzyklenstadien; frühe Diagnose erwünscht).

Eine gegenwärtige Vorgehensweise im Differenzialblutbild kann folglich markierungsfrei mit zum Beispiel einem Interferenzmikroskop 14 durchgeführt werden: zum Beispiel Zellgröße, Reifung, Kern-Plasmaverhältnis, Zythoplasmaeinschlüsse, Chromatinstruktur.

## Patentansprüche

1. In-vitro Verfahren zum markierungsfreien Bestimmen eines Zelltyps einer Zelle (10) in einer biologischen Probe, wobei eine Mikroskopiervorrichtung (14) ein Höhenprofil (18) der Zelle (10) gegenüber einer Trägerplatte (16) erfasst (S1), **gekennzeichnet durch** die durch eine Zellanalyseeinrichtung (13) durchgeführten Schritte:
- Ermitteln eines Zellkompartiments (12, 12', 12") der Zelle (10) anhand des erfassten Höhenprofils (18, S2),
- Ermitteln eines vorbestimmten quantitativen Zellmerkmals anhand des ermittelten Zellkompartiments (12, 12', 12", S3)und anhand des Höhenprofils (18)
- Bestimmen des Zelltyps der Zelle (10) anhand des ermittelten quantitativen Zellmerkmals (S3).

2. Verfahren nach Anspruch 1,
**dadurch gekennzeichnet, dass** das Ermitteln des vorbestimmten quantitativen Zellmerkmals zusätzlich (S3) anhand einer Intensität, Polarisation oder Fluoreszenz der Zelle (10) erfolgt.

3. Verfahren nach einem der vorhergehenden Ansprüche,
**dadurch gekennzeichnet, dass** das Ermitteln des Zellkompartiments (12, 12', 12") durch Bestimmen eines Zellvolumens, Ermitteln eines ersten Zellkompartiments (12, 12', 12") und Ermitteln eines weiteren Zellkompartiments (12, 12', 12", S3) erfolgt.

4. Verfahren nach einem der vorhergehenden Ansprüche,
**dadurch gekennzeichnet, dass** das quantitative Zellmerkmal ein Zellvolumen, ein Volumen des Zellkompartiments (12, 12', 12"), eine Zellfläche, eine Fläche des Zellkompartiments (12, 12', 12"), ein Verhältnis eines Zellvolumens zu einem Zellkernvolumen, ein Verhältnis einer Zellfläche zu einer Zellkernfläche, einen Durchmesser, eine Rundheit oder einen Umfang des Zellkompartiments (12, 12', 12"), eine Anzahl an Zellkompartimenten (12, 12', 12") der Zelle (10) und/oder ein statistisches Merkmal eines Zellmerkmals, das anhand der jeweiligen Höhenprofile (18) mehrerer Zellen (10) ermittelt wird, beschreibt.

5. Verfahren nach einem der vorhergehenden Ansprüche,
**dadurch gekennzeichnet, dass** das Bestimmen des Zelltyps (S3) anhand einer Kombination des ermittelten quantitativen Zellmerkmals mit einem weiteren ermittelten quantitativen Zellmerkmal erfolgt.

6. Verfahren nach einem der vorhergehenden Ansprüche,
**dadurch gekennzeichnet, dass** das Bestimmen des Zelltyps der Zelle (10, S3) in einem ersten Klassifizierungsschritt der Zelle (10) anhand der Kombination der Anzahl des Zellkompartiments (12, 12', 12") und dem Verhältnis der Zellfläche zu der Fläche des Zellkompartiments (12, 12', 12") erfolgt, und einen weiteren Klassifizierungsschritt anhand der Kombination einer Varianz eines Durchmessers eines weiteren Zellkompartiments (12, 12', 12") und einem mittlerem Durchmesser des Zellkompartiments (12, 12', 12") umfasst.

7. Verfahren nach einem der vorhergehenden Ansprüche,
**dadurch gekennzeichnet, dass** das Erfassen des Höhenprofils (18) durch ein Überlagern einer Objektwelle mit einer Referenzwelle, einem Aufnehmen eines resultierenden Interferogramms und/oder einer mathematischen Rekonstruktion erfolgt.

8. Verfahren nach einem der vorhergehenden Ansprüche,
**dadurch gekennzeichnet, dass** das Erfassen des Höhenprofils (18) mittels digitaler holographischer Mikroskopie, Interferenzphasen-Mikroskopie oder quantitativer Phasen Mikroskopie erfolgt.

9. Verfahren nach einem der vorhergehenden Ansprüche,
**dadurch gekennzeichnet, dass** das Verfahren mit einer ungefärbten und/oder ungetrockneten Zelle (10) durchgeführt wird.

10. Verfahren nach einem der vorhergehenden Ansprüche, **gekennzeichnet durch** den Schritt:
- Phenotypisieren der Zelle (10) mit einem Marker, und/oder
- Exprimieren eines vorbestimmten Rezeptors
zum weiteren Zuordnen der Zelle (10).

11. Verfahren nach einem der vorhergehenden Ansprüche,
**dadurch gekennzeichnet, dass** das Verfahren anhand einer Vollblutprobe durchgeführt wird und/oder die biologische Probe Blutzellen, Leukozyten, eosinophile und/oder basophile Leukozyten umfasst.

12. Verfahren nach einem der vorhergehenden Ansprüche,
**dadurch gekennzeichnet, dass** das Bestimmen des Zelltyps (S3)
- zum Differenzieren von Neutrophilen, Eosinophilen, Basophilen, Lymphozyten und/oder Monozyten erfolgt, und/oder
- ein Bestimmen einer Zellfunktionalität umfasst, insbesondere ein Bestimmen eines Aktivierungszustandes einer Zelle (10) und/oder einem Nachweis einer Zelle (10), insbesondere eines deformierten Erythrozyten und/oder einer pathogen-befallenen Zelle (10).

13. Verfahren nach einem der vorhergehenden Ansprüche,
**dadurch gekennzeichnet, dass** das Bestimmen des Zelltyps (S3) ein Bestimmen eines Zellstadiums der Zelle (10) umfasst, insbesondere zum Differenzieren eines Zellalters, einem physiologischen oder morphologischen Zustand der Zelle (10) oder einem Aktivitätszustand der Zelle (10).

## Claims

1. In-vitro method for the label-free determination of a cell type of a cell (10) in a biological sample, wherein a microscopy device (14) detects (S1) a height profile (18) of the cell (10) relative to a carrier plate (16), **characterized by** the steps carried out by a cell analysis device (13):
- determining a cell compartment (12, 12', 12") of the cell (10) using the detected height profile (18, S2),
- determining a predetermined quantitative cell feature using the determined cell compartment (12, 12', 12", S3) and using the height profile (18),
- determining the cell type of the cell (10) using the determined quantitative cell feature (S3).

2. Method according to Claim 1,
**characterized in that** the determining of the predetermined quantitative cell feature is additionally effected (S3) using an intensity, polarization or fluorescence of the cell (10).

3. Method according to either of the preceding claims,
**characterized in that** the determining of the cell compartment (12, 12', 12") is effected by determining a cell volume, determining a first cell compartment (12, 12', 12") and determining a further cell compartment (12, 12', 12", S3).

4. Method according to one of the preceding claims,
**characterized in that** the quantitative cell feature describes a cell volume, a volume of the cell compartment (12, 12', 12"), a cell area, an area of the cell compartment (12, 12', 12"), a ratio of a cell volume to a cell nucleus volume, a ratio of a cell area to a cell nucleus area, a diameter, a roundness, or a circumference of the cell compartment (12, 12', 12"), a number of cell compartments (12, 12', 12"), the cell (10) and/or a statistical feature of a cell feature which is determined using the respective height profile (18) of a plurality of cells (10).

5. Method according to one of the preceding claims,
**characterized in that** the determining of the cell type (S3) is effected using a combination of the determined quantitative cell feature with a further determined quantitative cell feature.

6. Method according to one of the preceding claims,
**characterized in that** the determining of the cell type of the cell (10, S3) is effected in a first classification step for the cell (10) using the combination of the number of the cell compartment (12, 12', 12") and the ratio of the cell area to the area of the cell compartment (12, 12', 12"), and comprises a further classification step using the combination of a variance of a diameter of a further cell compartment (12, 12', 12") and a mean diameter of the cell compartment (12, 12', 12").

7. Method according to one of the preceding claims,
**characterized in that** the detecting of the height profile (18) is effected by superimposing an object wave with a reference wave, acquiring a resulting interferogram and/or mathematical reconstruction.

8. Method according to one of the preceding claims,
**characterized in that** the detecting of the height profile (18) is effected by means of digital holographic microscopy, interference phase microscopy or quantitative phase microscopy.

9. Method according to one of the preceding claims,
**characterized in that** the method is carried out with an unstained and/or undried cell (10).

10. Method according to one of the preceding claims,
**characterized by** the step of:
- phenotyping the cell (10) with a marker, and/or
- expressing a predetermined receptor
for further classification of the cell (10).

11. Method according to one of the preceding claims,
**characterized in that** the method is carried out using a whole blood sample and/or the biological sample comprises blood cells, leukocytes, eosinophilic and/or basophilic leukocytes.

12. Method according to one of the preceding claims,
**characterized in that** the determining of the cell type (S3)
- is effected for the differentiation of neutrophils, eosinophils, basophils, lymphocytes and/or monocytes, and/or
- comprises determining a cell functionality, especially determining a state of activation of a cell (10) and/or verification of a cell (10), especially a deformed erythrocyte and/or a pathogen-infected cell (10).

13. Method according to one of the preceding claims,
**characterized in that** the determining of the cell type (S3) comprises determining a cell stage of the cell (10), especially for the differentiation of a cell age, a physiological or morphological state of the cell (10) or a state of activity of the cell (10).

## Revendications

1. Procédé in vitro pour définir sans marquage le type d'une cellule (10) dans un échantillon biologique, dans lequel un système (14) à microscope relève un profil (18) en hauteur de la cellule (10) par rapport à une plaque (16) support (S1), **caractérisé par** les stades effectués par un dispositif (13) d'analyse de cellules :
- détermination d'un compartiment (12, 12', 12") de la cellule (10) à l'aide du profil (18, S2) en hauteur, qui a été relevé,
- détermination d'une caractéristique quantitative de la cellule définie à l'avance à l'aide du compartiment (12, 12', 12", S3) déterminé de la cellule et à l'aide du profil (18) en hauteur,
- définition du type de la cellule (10) à l'aide de la caractéristique (S3) quantitative de la cellule, qui a été déterminée.

2. Procédé suivant la revendication 1,
**caractérisé en ce que**
la détermination de la caractéristique quantitative de la cellule définie à l'avance s'effectue supplémentairement (S3) à l'aide d'une intensité, d'une polarisation ou d'une fluorescence de la cellule (10).

3. Procédé suivant l'une des revendications précédentes,
**caractérisé en ce que**
la détermination du compartiment (12, 12', 12") de la cellule s'effectue par définition d'un volume de la cellule, détermination d'un premier compartiment (12, 12', 12") de la cellule et détermination d'un autre compartiment (12, 12', 12") de la cellule.

4. Procédé suivant l'une des revendications précédentes,
**caractérisé en ce que**
la caractéristique quantitative de la cellule décrit un volume de la cellule, un volume du compartiment (12, 12', 12") de la cellule, une surface de la cellule, une surface du compartiment (12, 12', 12") de la cellule, un rapport d'un volume de la cellule à un volume du noyau de la cellule, un rapport d'une surface de la cellule à une surface du noyau de la cellule, un diamètre, un arrondi ou un pourtour du compartiment (12, 12', 12") de la cellule, un nombre de compartiments (12, 12', 12") de la cellule (10) et/ou une caractéristique statistique d'une caractéristique de la cellule, que l'on détermine à l'aide des profils (18) en hauteur respectifs de plusieurs cellules (10).

5. Procédé suivant l'une des revendications précédentes,
**caractérisé en ce que**
la définition du type (S3) de la cellule s'effectue à l'aide d'une combinaison de la caractéristique quantitative de la cellule, qui a été déterminée, et d'une autre caractéristique quantitative de la cellule, qui a été déterminée.

6. Procédé suivant l'une des revendications précédentes,
**caractérisé en ce que**
la définition du type de la cellule (10, S3) s'effectue dans un premier stade de classification de la cellule (10) à l'aide de la combinaison du nombre de compartiments (12, 12', 12") de la cellule et du rapport de la surface de la cellule à la surface du compartiment (12, 12', 12") de la cellule et, dans un autre stade de classification, à l'aide de la combinaison d'une variance d'un diamètre d'un autre compartiment (12, 12', 12") de la cellule et d'un diamètre moyen du compartiment (12, 12', 12") de la cellule.

7. Procédé suivant l'une des revendications précédentes,
**caractérisé en ce que**
la détection du profil (18) en hauteur s'effectue par une superposition d'une onde objet à une onde de référence, un enregistrement d'un interférogramme qui s'ensuit et/ou une reconstruction mathématique.

8. Procédé suivant l'une des revendications précédentes,
**caractérisé en ce que**
la détermination du profil (18) en hauteur s'effectue au moyen d'une microscopie holographique numérique, d'une microscopie à phases interférentielle ou d'une microscopie à phases quantitative.

9. Procédé suivant l'une des revendications précédentes,
**caractérisé en ce que**
l'on effectue le procédé sur une cellule (10) non colorée et/ou non séchée.

10. Procédé suivant l'une des revendications précédentes,
**caractérisé par** le stade :
- phénotypage de la cellule (10) par un marqueur et/ou
- expression d'un récepteur défini à l'avance d'association supplémentaire de la cellule (10).

11. Procédé suivant l'une des revendications précédentes,
**caractérisé en ce que**
l'on effectue le procédé à l'aide d'un échantillon de sang complet et/ou l'échantillon biologique comprend des globules sanguins, des leucocytes, des leucocytes éosinophiles et/ou basophiles.

12. Procédé suivant l'un des revendications précédentes,
**caractérisé en ce que**
la définition du type (S3) de la cellule
- s'effectue pour différencier des neutrophiles, des éosinophiles, des basophiles, des lymphocytes et/ou des monocytes et/ou
- comprend une définition d'une fonctionnalité cellulaire, notamment une définition d'un état d'activation d'une cellule (10) et/ou une évaluation d'une cellule (10), notamment d'un érythrocyte déformé et/ou d'une cellule (10) pathogène.

13. Procédé suivant l'une des revendications précédentes,
**caractérisé en ce que**
la définition du type (S3) de la cellule comprend une définition d'un stade de la cellule (10), notamment pour la différenciation d'un âge de la cellule, d'un état physiologique ou morphologique de la cellule (10) ou d'un état d'activité de la cellule (10).
